(19) Europäisches Patentamt

European Patent Office

Office européen des brevets

(11) **EP 2 157 124 A1**

(12) **EUROPEAN PATENT APPLICATION**
published in accordance with Art. 153(4) EPC

(43) Date of publication:
**24.02.2010 Bulletin 2010/08**

(21) Application number: **08776938.6**

(22) Date of filing: **28.05.2008**

(51) Int Cl.:
*C08J 9/36* (2006.01)      *C08J 9/12* (2006.01)

(86) International application number:
**PCT/JP2008/059823**

(87) International publication number:
**WO 2008/149749 (11.12.2008 Gazette 2008/50)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **04.06.2007 JP 2007147757
28.04.2008 JP 2008117126**

(71) Applicant: **Nitto Denko Corporation
Ibaraki-shi, Osaka 567-8680 (JP)**

(72) Inventors:
• **YASUDA, Hironori**
  **Ibaraki-shi**
  **Osaka 567-8680 (JP)**

• **YAMAMOTO, Takayuki**
  **Ibaraki-shi**
  **Osaka 567-8680 (JP)**
• **KANADA, Mitsuhiro**
  **Ibaraki-shi**
  **Osaka 567-8680 (JP)**
• **OZAWA, Kaori**
  **Ibaraki-shi**
  **Osaka 567-8680 (JP)**

(74) Representative: **Grünecker, Kinkeldey,
Stockmair & Schwanhäusser
Anwaltssozietät
Leopoldstrasse 4
80802 München (DE)**

(54) **THERMOPLASTIC RESIN FOAM AND PROCESS FOR PRODUCING THE SAME**

(57)     Disclosed is a thermoplastic resin foam which excels typically in strength, flexibility, cushioning properties, and strain recovery and is especially resistant to cell structure shrinkage caused by the restoring force of resin.

The thermoplastic resin foam which is obtained by subjecting a thermoplastic resin composition containing a thermoplastic elastomer and an active-energy-ray-curable resin to foam molding to give a foamed structure, and irradiating the foamed structure with an active energy ray to allow the active-energy-ray-curable resin to form a cross-linked structure in the foamed structure. Also, the thermoplastic resin foam which is obtained by subjecting a thermoplastic resin composition containing a thermoplastic elastomer, an active-energy-ray-curable resin, and a thermal cross-linking agent to foam molding to give a foamed structure, irradiating the foamed structure with an active energy ray to allow the active-energy-ray-curable resin to form a cross-linked structure in the foamed structure, and heating the resulting foamed structure bearing the cross-linked structure to thereby allow the thermal cross-linking agent to form another cross-linked structure in the foamed structure.

EP 2 157 124 A1

**Description**

Technical Field

The present invention relates to thermoplastic resin foams excellent typically in cushioning properties and in compression set, and to processes for producing the foams. Specifically, it relates to thermoplastic resin foams and to processes for producing the foams, which thermoplastic resin foams have satisfactory cushioning properties, show superior compression set at high temperatures, and are thereby very useful, for example, as internal insulators typically for electronic appliances, cushioning materials, sound insulators, heat insulators, food packaging materials, clothing materials, and building materials.

Background Art

Foams to be used, for example, as internal insulators typically for electronic appliances, cushioning materials, sound insulators, thermal insulators, food packaging materials, clothing materials, and building materials are required to excel in properties such as flexibility (softness), cushioning properties, and heat-insulating properties from the viewpoint of securing the sealing properties of such foams when the foams are incorporated as components. Known as such foams are thermoplastic resin foams represented by olefinic resin foams such as polyethylene and polypropylene foams. These foams, however, have a poor strength and are insufficient in flexibility and cushioning properties. In particular, when compressed and held at high temperatures, they are poor in strain recovery to cause inferior sealing properties. As an attempt to improve these insufficient properties, there has been employed a technique of incorporating, for example, a rubber component into a thermoplastic resin to impart elasticity to the resin. The elasticity softens the material resin itself and allows the resin to have restoring force to thereby have improved strain recovery. Though the incorporation of an elastomer component generally improves the restoring ability due to elasticity, the resulting foam shows a low expansion ratio. This is because, once the resin undergoes expansion and deformation by the action of a blowing agent to form a cell structure, the cell structure shrinks due to restoring force of the resin.

Common processes for the production of a foam include chemical processes and physical processes. A general physical process includes dispersing a low-boiling liquid (blowing agent), such as a chlorofluorocarbon or hydrocarbon, in a polymer and then heating the dispersion to volatilize the blowing agent and thereby form cells (bubbles). A chemical process for obtaining a foam includes pyrolyzing a compound (blowing agent) added to a polymer base to generate a gas and thereby form cells. However, the technique of physical foaming has various environmental issues such as the harmfulness of the substance used as the blowing agent and ozonosphere depletion caused by the substance; while the technique of chemical foaming has a problem that a corrosive gas and impurities remain in the foam after gas generation, and these cause contamination, but such contamination are undesirable especially in applications such as electronic components where such contamination should be minimized.

A process for obtaining a foam having a small cell diameter and a high cell density has recently been proposed. This process includes dissolving a gas such as nitrogen or carbon dioxide in a polymer under a high pressure, subsequently releasing the polymer from the pressure, and heating the polymer to a temperature around the glass transition temperature or softening point of the polymer to thereby form cells. In this foaming technique, a gas such as nitrogen or carbon dioxide is dissolved in a polymer under a high pressure, the polymer is then released from the pressure and, in some cases, is heated to a temperature around the glass transition temperature to allow the growth of cells. This foaming technique has an advantage that a foam having a micro-cell structure which has not been obtained so far can be produced. In the foaming technique, nuclei are formed in a system in a thermodynamically unstable state and these nuclei expand and grow to form cells and thereby give a micro-cellular foam. Various attempts to apply the foaming technique to thermoplastic elastomers such as thermoplastic polyurethanes so as to give a flexible foam have been proposed. For example, Patent Document 1 discloses a process for producing a foam that contains uniform and fine cells and is resistant to deformation. This process includes foaming a thermoplastic polyurethane resin according to the above-mentioned foaming technique.

However, a sufficiently high expansion ratio has not been obtained according to the foaming technique. Specifically, after the release of pressure (decompression) to reach an atmospheric pressure, nuclei formed by the gas dissolved in the polymer expand and grow to form cells, and a foam with a high expansion ratio is once formed. However, the gas such as nitrogen or carbon dioxide remained in the cells gradually passes through the polymer cell walls, whereby the polymer cells shrink after foaming (expansion). The cells thereby gradually deform in shape and/or become smaller.

Patent Document 1: Japanese Unexamined Patent Application Publication (JP-A) No. H10-168215

Disclosure of Invention

Problems to be Solved by the Invention

Accordingly, an object of the present invention is to provide a thermoplastic resin foam which excels in properties such as strength, flexibility, cushioning properties, and strain recovery, and, especially, has a cell structure resistant to shrinkage caused by the restoring force of the resin.
Another object of the present invention is to provide a process for producing a thermoplastic resin foam which excels in properties such as strength, flexibility, cushioning properties, and strain recovery, and, especially, has a cell structure resistant to shrinkage caused by the restoring force of the resin.

Means for Solving the Problems

After intensive investigations to achieve the objects, the present inventors have found that the compressive strain recovery of a thermoplastic resin foam prepared by foam molding of a thermoplastic resin composition can be improved by subjecting the material thermoplastic resin composition to foam molding to give a foamed structure, and thereafter forming a cross-linked structure in the foamed structure. The present invention has been made based on these findings.

Specifically, the present invention provides, in an embodiment, a thermoplastic resin foam which is obtained by subjecting a thermoplastic resin composition containing a thermoplastic elastomer and an active-energy-ray-curable resin to foam molding to give a foamed structure, and irradiating the foamed structure with an active energy ray to allow the active-energy-ray-curable resin to form a cross-linked structure in the foamed structure.

The present invention also provides, in another embodiment, a thermoplastic resin foam which is obtained by subjecting a thermoplastic resin composition containing a thermoplastic elastomer, an active-energy-ray-curable resin, and a thermal cross-linking agent to foam molding to give a foamed structure, irradiating the foamed structure with an active energy ray to allow the active-energy-ray-curable resin to form a cross-linked structure in the foamed structure, and heating the resulting foamed structure bearing the cross-linked structure to thereby allow the thermal cross-linking agent to form another cross-linked structure in the foamed structure.

The foam molding of the thermoplastic resin composition is preferably performed by molding the thermoplastic resin composition to give an unfoamed resin molded article, impregnating the unfoamed resin molded article with a blowing agent, and subjecting the impregnated unfoamed resin molded article to decompression (pressure reduction) to allow the blowing agent to expand to thereby form cells.

When the thermoplastic resin composition is molded into an unfoamed molded article as a sheet having a thickness of 0.5 mm, the unfoamed molded article preferably has a retention of tensile stress of 40% or more, as measured after applying a 10% tensile strain at an ambient temperature of 80°C for 1400 seconds.

The blowing agent is preferably carbon dioxide or nitrogen and is more preferably a fluid in a supercritical state.

In yet another embodiment, the present invention provides a process for producing a thermoplastic resin foam. The process includes the steps of subjecting a thermoplastic resin composition containing a thermoplastic elastomer and an active-energy-ray-curable resin to foam molding to give a foamed structure; and irradiating the foamed structure with an active energy ray to allow the active-energy-ray-curable resin to form a cross-linked structure in the foamed structure.

In still another embodiment, the present invention provides another process for producing a thermoplastic resin foam. This process includes the steps of subjecting a thermoplastic resin composition containing a thermoplastic elastomer, an active-energy-ray-curable resin, and a thermal cross-linking agent to foam molding to give a foamed structure; irradiating the foamed structure with an active energy ray to allow the active-energy-ray-curable resin to form a cross-linked structure in the foamed structure; and heating the foamed structure bearing the cross-linked structure to thereby allow the thermal cross-linking agent to form another cross-linked structure in the foamed structure.

Advantages

The thermoplastic resin foams according to embodiments of the present invention have the above configurations and are thereby advantageous in that they excel in properties such as strength, flexibility, cushioning properties, and strain recovery and each have a cell structure resistant to shrinkage caused by the restoring force of the resin. The processes according to embodiments of the present invention can efficiently produce thermoplastic resin foams that excel in properties such as strength, flexibility, cushioning properties, and strain recovery and each have a cell structure resistant to shrinkage caused by the restoring force of the resin.

Brief Description of Drawings

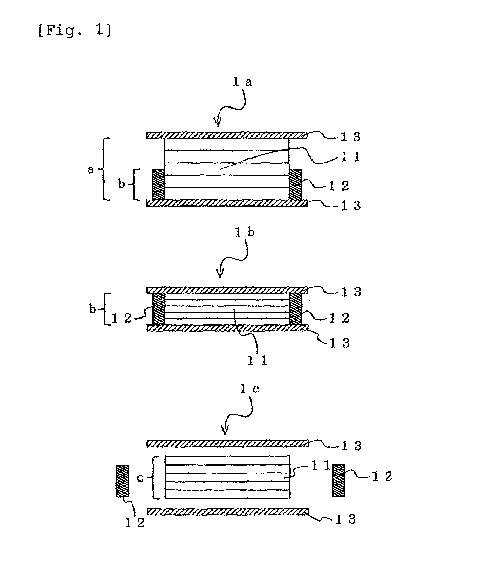

[Fig. 1] Fig. 1 is a diagram illustrating how a strain recovery (80°C, 50% compression set) is measured.

Reference Numerals

1a  before compressing to 50%
1b  during compressing to 50%
1c  after release from compressing to 50%
11  sample (test piece)
12  spacer
13  plate

a thickness of sample 11 before compressing to 50%
b thickness of spacers 12 (half the thickness of sample 11 before compressing to 50%)
c thickness of sample 11 after compressing to 50%

Best Modes for Carrying Out the Invention

(Thermoplastic Resin Composition)

The thermoplastic resin composition is a composition containing at least a thermoplastic elastomer and an active-energy-ray-curable resin and serves as a raw material for a thermoplastic resin foam. Foam molding of the thermoplastic resin composition gives a foamed structure, and irradiation of the foamed structure with an active energy ray cures the active-energy-ray-curable resin to thereby form a cross-linked structure in the foamed structure. Thus, a thermoplastic resin foam excellent in properties such as strength, flexibility, cushioning properties, and strain recovery can be obtained.

Examples of a thermoplastic elastomer (thermoplastic resin) to be contained as a main component in the thermoplastic resin composition include acrylic thermoplastic elastomers, urethane thermoplastic elastomers, styrenic thermoplastic elastomers, polyester thermoplastic elastomers, polyamide thermoplastic elastomers, and polyolefin thermoplastic elastomers. Among them, acrylic thermoplastic elastomers and urethane thermoplastic elastomers are preferred. Each of different thermoplastic elastomers can be used alone or in combination. Acrylic thermoplastic elastomers are copolymers each containing an acrylic ester as a main monomer component, of which those having a low glass transition temperature, such as those having a glass transition temperature of 0°C or lower, are preferred. More specifically, such acrylic thermoplastic elastomers are prepared by copolymerization of an acrylic monomer (of which an acrylic ester is preferred) as a main monomer component with a comonomer and a functional group-containing monomer.

Of the acrylic monomers, acrylic esters are preferred, and examples thereof include ethyl acrylate (EA), butyl acrylate (BA), 2-ethylhexyl acrylate (2-EHA), isooctyl acrylate, isononyl acrylate, propyl acrylate, isobutyl acrylate, and hexyl acrylate.

Such acrylic monomers are used as a main monomer component of an acrylic thermoplastic elastomer, and the content thereof should be 50 percent by weight or more, and is preferably 70 percent by weight or more, based on the total amount of monomer components constituting the acrylic thermoplastic elastomer. Each of different acrylic monomers can be used alone or in combination.

Examples of the comonomer include vinyl acetate (VAc), acrylonitrile (AN), acrylamide (AM), styrene (St), methyl methacrylate (MMA), and methyl acrylate (MA).

The amount of comonomers is, for example, from 0 to 50 percent by weight based on the total amount of monomer components constituting the acrylic thermoplastic elastomer. Each of different comonomers can be used alone or in combination.

Exemplary functional group-containing monomers include carboxyl-containing monomers such as methacrylic acid (MMA), acrylic acid (AA), and itaconic acid (IA); hydroxyl-containing monomers such as hydroxyethyl methacrylate (HEMA) and hydroxypropyl methacrylate (HPMA); amino-containing monomers such as dimethylaminoethyl methacrylate (DM); amido-containing monomers such as acrylamide (AM) and methylolacrylamide (N-MAN); epoxy-containing monomers such as glycidyl methacrylate (GMA); and acid anhydride group-containing monomers such as maleic anhydride. Among them, preferred examples are acrylic acid and hydroxyethyl methacrylate.

The amount of functional group-containing monomers is, for example, from 0 to 5 percent by weight based on the total amount of monomer components constituting the acrylic thermoplastic elastomer. Each of different functional group-containing monomers can be used alone or in combination.

The urethane thermoplastic elastomers for use herein are not limited and can be any of resins prepared through urethanization reaction of an isocyanate compound and a polyol compound. Urethane thermoplastic elastomers having a reactive functional group can also be used herein.

Exemplary isocyanate compounds include diisocyanate compounds such as tolylene diisocyanate, diphenylmethane diisocyanate, hexamethylene diisocyanate, naphthalene diisocyanate, isophorone diisocyanate, and xylene diisocyanate. Among them, preferred examples are diphenylmethane diisocyanate and hexamethylene diisocyanate. Each of different isocyanate compounds can be used alone or in combination.

Exemplary polyol compounds include polyester-polyol compounds prepared through a condensation reaction between a polyhydric alcohol (e.g., ethylene glycol, propylene glycol, butanediol, butenediol, hexanediol, pentanediol, neopentyldiol, or pentanediol) and an aliphatic dicarboxylic acid (e.g., adipic acid, sebacic acid, azelaic acid, or maleic acid) or aromatic dicarboxylic acid (e.g., terephthalic acid or isophthalic acid); polyether-polyol compounds such as polyethylene ether glycols, polypropylene ether glycols, polytetramethylene ether glycols, and polyhexamethylene ether glycols; lactone-polyol compounds such as polycaprolactone glycols, polypropiolactone glycols, and polyvalerolactone glycols; and polycarbonate-polyol compounds prepared through a dealcoholization reaction of a polyhydric alcohol (e.g., ethylene glycol, propylene glycol, butanediol, pentanediol, octanediol, or nonanediol) typically with diethylene carbonate or dipropylene carbonate. Exemplary polyol compounds further include diols, such as polyethylene glycols, having a low molecular weight. Among such polyol compounds, preferred examples are polyester-polyol compounds and polyether-polyol compounds. Each of different polyol compounds can be used alone or in combination.

The urethane thermoplastic elastomers having a reactive functional group can be obtained, for example, by a technique of using an isocyanate compound in excess mole to a polyol compound in polymerization to thereby allow isocyanate groups to remain in the resulting polymer.

The active-energy-ray-curable resin is not particularly limited, as long as being a resin curable by the irradiation with an active energy ray. Among them, preferred are polymerizable unsaturated compounds which are nonvolatile and have a low molecular weight in terms of a weight-average molecular weight of 10000 or less. Of such active-energy-ray-curable resins, preferred are ultraviolet-curable resins that are curable by the irradiation with an ultraviolet ray. After a thermoplastic resin composition, if containing an active-energy-ray-curable resin, is subjected to foam molding (expansion molding) to give a foamed structure, a cross-linked structure can be formed in the foamed structure by the irradiation of the foamed structure with an active energy ray to react (cure) the active-energy-ray-curable resin. This further improves the shape retention (stability in shape) of the thermoplastic resin foam to prevent time-dependent deformation and shrinkage of the cell structure in the thermoplastic resin foam. The thermoplastic resin foam having such a cross-linked structure further excels in strain recovery upon compression at high temperatures and can maintain a high expansion ratio that has been achieved by foaming.

Examples of the polymerizable unsaturated compounds include esters of (meth)acrylic acid with a polyhydric alcohol, such as phenoxypolyethylene glycol (meth)acrylates, ε-caprolactone (meth)acrylates, polyethylene glycol di (meth)acrylates, polypropylene glycol di(meth)acrylates, 1,4-butanediol di(meth)acrylates, tetraethylene glycol di(meth) acrylates, 1,6-hexanediol (meth)acrylates, trimethylolpropane tri(meth)acrylates, tetramethylolmethane tetra(meth)acrylates, pentaerythritol tri(meth)acrylates, pentaerythritol tetra(meth)acrylates, and neopentyl glycol di(meth)acrylates; urethane (meth)acrylates; multifunctional urethane acrylates; epoxy (meth)acrylates; and oligo-ester (meth)acrylates. The polymerizable unsaturated compounds can be monomers or oligomers. As used herein the term "(meth)acrylic" refers to "acrylic and/or methacrylic", and others are the same.

The amount of active-energy-ray-curable resins in the thermoplastic resin composition is not especially limited, as long as a cross-linked structure can be formed in the foamed structure through the irradiation of the foamed structure with an active energy ray. Typically, when any of the polymerizable unsaturated compounds is used as an active-energy-ray-curable resin, the amount thereof is from 3 to 100 parts by weight, and preferably from 5 to 60 parts by weight, per 100 parts by weight of the thermoplastic elastomer. The active-energy-ray-curable resin, if used in an excessively large amount (e.g., if the amount of the polymerizable unsaturated compound is more than 100 parts by weight per 100 parts by weight of the thermoplastic elastomer), the foam may become more hard or rigid and have insufficient cushioning properties. In contrast, if the active-energy-ray-curable resin is used in an excessively small amount (e.g., if the amount of the polymerizable unsaturated compound is less than 3 parts by weight per 100 parts by weight of the thermoplastic elastomer), it may be difficult for the foam to maintain a high expansion ratio. Each of different active-energy-ray-curable resins can be used alone or in combination.

The combination between a thermoplastic elastomer and an active-energy-ray-curable resin is preferably such a combination that the difference $\Delta\delta$ ($\delta_1 - \delta_2$) between the solubility parameter (SP) $\delta_1$ [$(J/cm^3)^{1/2}$] of the thermoplastic elastomer and the solubility parameter (SP) $\delta_2$ [$(J/cm^3)^{1/2}$] of the active-energy-ray-curable resin falls within $\pm 2.5$ [$(J/cm^3)^{1/2}$] and is more preferably such a combination that the difference falls within $\pm 2$ [$(J/cm^3)^{1/2}$]. Such a preferred combination of a thermoplastic elastomer and an active-energy-ray-curable resin results in very good compatibility (miscibility) between the thermoplastic elastomer and the active-energy-ray-curable resin, and a larger amount of the active-energy-ray-curable resin with respect to the thermoplastic elastomer can be present in the thermoplastic resin composition. Typically, when a thermoplastic elastomer and a polymerizable unsaturated compound are used in such a preferred combination, the amount of the polymerizable unsaturated compound in the thermoplastic resin composition as a raw material for the thermoplastic resin foam can be from 3 to 150 parts by weight, and preferably from 5 to 120 parts by weight, per 100 parts by weight of the thermoplastic elastomer.

The suitable combination between a thermoplastic elastomer and an active-energy-ray-curable resin increases the relative amount of the active-energy-ray-curable resin to the thermoplastic elastomer, and this allows the thermoplastic resin foam to be more stable (fixable) in its shape (to have higher shape retention). In addition, when the active-energy-ray-curable resin is reacted to form a cross-linked structure, the superior compatibility between the two components allows a molecular chain of the thermoplastic elastomer and a network of the active-energy-ray-curable resin together form an interpenetrating polymer network (IPN), and this helps the foam to have further higher shape retention.

The solubility parameters (SP) are values determined by calculation according to the Fedors method. According to the calculating expression of the Fedors method, a solubility parameter (SP) is determined by dividing the sum of molar cohesive energy of respective atom groups by the volume; and obtaining the square root of the divided value. The solubility parameter indicates the polarity per unit volume.

The thermoplastic resin composition may contain a photoinitiator (photopolymerization initiator). When a thermoplastic resin composition further containing a photoinitiator is foam-molded to give a foamed structure, the presence of the photoinitiator facilitates the formation of a cross-linked structure through irradiation of the foamed structure with an active energy ray to react the active-energy-ray-curable resin in the foamed structure.

The photoinitiator for use herein is not specifically limited and can be chosen from among various photoinitiators. Exemplary photoinitiators include benzoin ether photoinitiators such as benzoin methyl ether, benzoin ethyl ether, benzoin propyl ether, benzoin isopropyl ether, benzoin isobutyl ether, 2,2-dimethoxy-1,2-diphenylethan-1-one, and anisole methyl ether; acetophenone photoinitiators such as 2,2-diethoxyacetophenone, 2,2-dimethoxy-2-phenylacetophenone, 1-hydroxycyclohexyl phenyl ketone, 4-phenoxydichloroacetophenone, and 4-t-butyl-dichloroacetophenone; $\alpha$-ketol photoinitiators such as 2-methyl-2-hydroxypropiophenone and 1-[4-(2-hydroxyethyl)-phenyl]-2-hydroxy-2-methylpropan-1-one; aromatic sulfonyl chloride photoinitiators such as 2-naphthalenesulfonyl chloride; photoactive oxime photoinitiators such as 1-phenyl-1,1-propanedione-2-(o-ethoxycarbonyl)-oxime; benzoin photoinitiators such as benzoin; benzil photoinitiators such as benzil; benzophenone photoinitiators such as benzophenone, benzoylbenzoic acid, 3,3'-dimethyl-4-methoxybenzophenone, polyvinylbenzophenone, and $\alpha$-hydroxycyclohexyl phenyl ketone; ketal photoinitiators such as benzyl dimethyl ketal; thioxanthone photoinitiators such as thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, and dodecylthioxanthone; $\alpha$-aminoketone photoinitiators such as 2-methyl-1-[4-(methylthio)phenyl]-2-morpholinopropan-1-one and 2-benzyl-2-dimethylamino-1-(9-morpholinophenyl)-butanone-1; and acylphosphine oxide photoinitiators such as 2,4,6-trimethylbenzoyldiphenylphosphine oxide and bis(2,4,6-trimethylbenzoyl)-phenylphosphine oxide.

Though not critical, the amount of photoinitiators can be chosen within a range of, for example, from 0.01 to 5 parts by weight, and preferably from 0.2 to 4 parts by weight, per 100 parts by weight of the thermoplastic elastomer in the thermoplastic resin composition. Each of different photoinitiators can be used alone or in combination.

The thermoplastic resin composition may further contain a thermal cross-linking agent that reacts with a reactive functional group contained in the thermoplastic resin composition. Exemplary thermal cross-linking agents include polyisocyanates such as diphenylmethane diisocyanate, tolylene diisocyanate, and hexamethylene diisocyanate; and polyamines such as hexamethylenediamine, triethylenetetramine, tetraethylenepentamine, hexamethylenediamine carbamate, N,N'-dicinnamylidene-1,6-hexanediamine, 4,4'-methylenebis(cyclohexylamine) carbamate, and 4,4'-(2-chloroaniline). Each of different thermal cross-linking agents can be used alone or in combination.

Such thermal cross-linking agents can be used as appropriate so as to obtain desired properties as mentioned below. Though not critical, the amount of thermal cross-linking agents is generally from about 0.01 to 10 parts by weight, and preferably from about 0.05 to 5 parts by weight, per 100 parts by weight of the thermoplastic elastomer in the thermoplastic resin composition.

When a thermoplastic resin composition further containing a thermal cross-linking agent is subjected to foam molding to give a foamed structure, the presence of the thermal cross-linking agent enables the formation of a cross-linked structure in the foamed structure through heating of the foamed structure. The formation of a cross-linked structure through heating advantageously helps the thermoplastic resin foam to have higher shape retention and protects the cell structure from deformation and shrinkage with time.

The thermoplastic resin composition may contain such a thermal cross-linking agent in combination with a thermoplastic elastomer (thermoplastic resin) having a reactive functional group. Further, the thermoplastic resin composition may contain a thermoplastic elastomer having a reactive functional group, a thermoplastic resin having no reactive functional group, and a cross-linking agent having a reactive functional group in combination. The amounts of these components can be adjusted as appropriate so as to obtain desired properties as below.

A thermoplastic resin foam according to an embodiment of the present invention may further contain powder particles. The powder particles function as a nucleator in foam molding. The presence of powder particles therefore gives a satisfactorily expanded thermoplastic resin foam. Exemplary powder particles include powdery substances such as talc, silica, alumina, zeolite, calcium carbonate, magnesium carbonate, barium sulfate, zinc oxide, titanium oxide, aluminum hydroxide, magnesium hydroxide, clays such as mica and montmorinite, carbon particles, glass fibers, and carbon tubes. Each of different types of powder particles can be used alone or in combination.

Powder particles having an average particle diameter (grain size) of from about 0.1 to about 20 $\mu$m are preferably used as the powder particles herein. Powder particles, if having an average particle diameter of less than 0.1 $\mu$m, may not sufficiently function as a nucleator. In contrast, powder particles, if having a grain size of more than 20 $\mu$m, may be undesirable, because they may cause gas escape during foam molding.

Though not critical, the amount of powder particles can be chosen as appropriate within a range of typically from 5 to 150 parts by weight, and preferably from 10 to 120 parts by weight, per 100 parts by weight of the thermoplastic elastomer. If the amount of powder particles is less than 5 parts by weight per 100 parts by weight of the thermoplastic elastomer, a uniform foam may be difficult to obtain. In contrast, if it exceeds 150 parts by weight, the thermoplastic resin composition may have a considerably high viscosity, and gas escape may occur during foam molding to impair foaming properties.

Thermoplastic resin foams have a property (also a drawback) that they are flammable, because they are composed of a thermoplastic elastomer. It is therefore preferred to incorporate any of flame-retardant powder particles (such as powdery flame retardants) as the powder particles in the thermoplastic resin composition, especially for applications in which impartation of flame retardancy is indispensable, as in electric/electronic appliances. Thermoplastic resin foams may also contain both of flame retardant(s) and powder particles other than flame retardants.

Of powdery flame retardants, inorganic flame retardants are preferred as the flame retardants. Examples of usable inorganic flame retardants include brominated flame retardants, chlorinated flame retardants, phosphorus flame retardants, and antimony flame retardants. However, the chlorinated or brominated flame retardants upon combustion emit a gas component which is harmful to the human body and corrodes machines, while the phosphorus or antimony flame retardants also have problems typically concerning harmfulness and explosiveness. It is therefore preferred in the present invention to use a non-halogen non-antimony inorganic flame retardant. Exemplary non-halogen non-antimony inorganic flame retardants include aluminum hydroxide, magnesium hydroxide, magnesium oxide/nickel oxide hydrates, magnesium oxide/zinc oxide hydrates, and other hydrated metallic compounds. Such hydrated metal oxides may have undergone a surface treatment. Each of different flame retardants can be used alone or in combination.

Though not critical, the content of flame retardants, if used, can be appropriately chosen within a range typically of from 5 to 150 percent by weight, and preferably from 10 to 120 percent by weight, based on the total amount of the thermoplastic resin composition. Excessively low contents thereof may result in reduced flame retardancy, while excessively high contents thereof may result in difficulties in obtaining a highly expanded thermoplastic resin foam.

The thermoplastic resin composition may further contain additives according to necessity. The additives to be incorporated into the thermoplastic resin according to necessity are not particularly limited in type, and various additives in ordinary use for foam molding can be used. Exemplary additives include foaming nucleators, crystal nucleators, plasticizers, lubricants, colorants (e.g., pigments and dyestuffs), ultraviolet absorbers, antioxidants, age inhibitors, fillers, reinforcements, antistatic agents, surfactants, tension modifiers, shrinkage inhibitors, flowability improvers, clays, vulcanizing agents, surface-treating agents, and flame retardants in another form than powdery form. The amounts of such additives are not limited and can be such amounts as commonly used in the production of thermoplastic resin foams. The amounts can be appropriately adjusted within ranges not impeding the thermoplastic resin foam to develop desired satisfactory properties such as strength, flexibility, and compression set.

The thermoplastic resin composition may be prepared typically through mixing, kneading, or melting/mixing of components such as a thermoplastic elastomer, an active-energy-ray-curable resin, a thermal cross-linking agent, a photoinitiator, powder particles, and additives according to necessity. The way to prepare the composition, however, is not limited to this.

When the thermoplastic resin composition is molded into an unfoamed molded article as a sheet having a thickness of 0.5 mm, the retention of tensile stress of the unfoamed molded article is preferably 40% or more, more preferably 50% or more, furthermore preferably 60% or more, and especially preferably 70% or more, as measured after applying a 10% tensile strain at an ambient temperature of 80°C for 1400 seconds. When the retention of tensile stress is 40% or more, the material composition shows a sufficiently high retention of stress during the formation of the foam, and the foam maintains repulsive stress generated upon the compression of the foam, resulting in further improved strain recovery.

A retention of tensile stress (measured after applying a 10% tensile strain at an ambient temperature of 80°C for 1400 seconds) can be determined in the following manner. An unfoamed molded article as a sheet 0.5 mm thick is prepared from the thermoplastic resin composition, and a 10% tensile strain is applied to the unfoamed molded article at an ambient temperature of 80°C using the Rheometrics ARES Rheometer (Dynamic Viscoelasticity Analyzer; supplied by TA Instruments) in the tensile stress relaxation measurement mode. A stress immediately after the application of the strain, and a stress after 1400 second-application of the tensile strain are measured and defined as the initial tensile stress and the tensile stress after 1400 seconds, respectively. The retention of tensile stress is then determined according to the following equation:

$$\text{Retention of tensile stress (80°C ambient temperature,}$$
$$\text{10\% tensile strain, after 1400 seconds)} = \text{(Tensile stress}$$
$$\text{after 1400 seconds)/(Initial tensile stress) x 100}$$

(Foamed Structure)

The foamed structure (expanded structure) can be obtained by subjecting the thermoplastic resin composition to foam molding. The foamed structure contains a cell structure (foam structure, cellular structure) therein. A thermoplastic resin foam according to an embodiment of the present invention can be prepared by forming a cross-linked structure in the foamed structure. The parameters such as thickness and dimensions of the foamed structure are not critical and can be appropriately chosen according to necessity.

A high-pressure gas may be used as a blowing agent for the formation of the thermoplastic resin foam. The high-pressure gas is not especially limited, as long as being a gas at ordinary temperature and normal atmospheric pressure and being inert to but impregnatable into the thermoplastic elastomer (thermoplastic resin). Examples thereof include rare gases such as helium and argon; carbon dioxide; nitrogen; and air. Such gases may be used in combination as a mixture. Among them, carbon dioxide or nitrogen is advantageously employed, because they can be impregnated in a large amount and at a high rate into the thermoplastic elastomer to be used as a material for the foam.

From the viewpoint of increasing the rate of impregnation into the thermoplastic elastomer, the high-pressure gas (especially carbon dioxide or nitrogen) is preferably a fluid in a supercritical state. Such a gas in a supercritical state (supercritical fluid) shows increased solubility in the thermoplastic elastomer and can be incorporated therein in a higher concentration. In addition, because of its high concentration, the supercritical gas generates a larger number of cell nuclei upon an abrupt pressure drop after impregnation. These cell nuclei grow to give cells, which are present in a higher density than in a foam having the same porosity but produced with the gas in another state. Consequently, use of a supercritical gas can give fine cells. The critical temperature and critical pressure of carbon dioxide are 31°C and 7.4 MPa, respectively.

The formation of a foamed structure through foam molding of a thermoplastic resin composition containing a thermoplastic elastomer and an active-energy-ray-curable resin may be performed according to a batch system or continuous system. In the batch system, the thermoplastic resin composition is previously molded into an unfoamed resin molded article (unfoamed molded article) in an adequate form such as a sheet form; the unfoamed resin molded article is impregnated with a high-pressure gas as the blowing agent, and the unfoamed resin molded article is then released from the pressure to allow the molded article to foam (to expand). In the continuous system, the thermoplastic resin composition is kneaded under a pressure (under a load) together with a high-pressure gas as the blowing agent; the kneaded mixture (kneadate) is molded into a molded article and, simultaneously, is released from the pressure (decompressed). Thus, molding and foaming are performed simultaneously in the continuous system. As has been described, a high-pressure gas may be impregnated into an unfoamed resin molded article which has been molded beforehand, or it may be impregnated under a high pressure into a molten thermoplastic elastomer, and the resulting molten article is molded simultaneously with decompression.

Specifically, examples of the way to produce a foamed structure according to a batch system will be illustrated below. Initially, the thermoplastic resin composition (composition for the formation of foamed structure) is extruded with an extruder such as a single-screw extruder or twin-screw extruder to thereby produce an unfoamed resin molded article. Alternatively, the thermoplastic resin composition is uniformly kneaded beforehand with a kneading machine equipped with one or more blades typically of a roller, cam, kneader, or Banbury type, and the resulting mixture (kneadate) is press-molded typically with a hot-plate press to thereby produce an unfoamed resin molded article having a predetermined thickness. Further alternatively, the thermoplastic resin composition is molded with an injection molding machine. The molding (forming) may be performed according to a suitable procedure to give a molded article having a desired shape and thickness. The unfoamed resin molded article (molded article derived from the thermoplastic resin composition) thus obtained is subjected to the steps of gas impregnation, decompression, and, where necessary, heating to form cells in the thermoplastic elastomer. In the gas impregnation step, the unfoamed resin molded article is placed in a pressure-tight vessel, and a high-pressure gas, such as carbon dioxide or nitrogen, is injected into the vessel and impregnated into the unfoamed resin molded article. In the decompression step, at the time when the high-pressure gas has been sufficiently impregnated, the unfoamed resin molded article is released from the pressure (the pressure is usually lowered to atmospheric pressure) to thereby generate cell nuclei in the thermoplastic elastomer. In the heating step, the cell nuclei are allowed to grow by heating according to necessity. Alternatively, the cell nuclei may be allowed to grow at room temperature without providing the heating step. After the cells are allowed to grow in the above manner, the article is rapidly cooled typically with cold water according to necessity to fix its shape to thereby yield a foamed structure constituting a thermoplastic resin foam according to an embodiment of the present invention. The unfoamed resin molded article is not limited in shape and can be in any form such as a roll or plate (sheet) form.

The injection of the high-pressure gas may be performed continuously or discontinuously. The heating for the growth of cells can be performed according to a known or common procedure such as heating with a water bath, oil bath, hot roll, hot-air oven, far-infrared rays, or microwaves. Though extrusion molding, press molding, and injection molding have been exemplified as molding techniques, the unfoamed resin molded article to be foamed may be produced according to other molding techniques.

Examples of the way to produce a foamed structure according to a continuous system will be illustrated below. The foamed structure can be produced through a kneading/impregnation step and a molding/decompression step. In the kneading/impregnation step, the thermoplastic resin composition (composition for the formation of foamed structure), which contains at least a thermoplastic elastomer and an active-energy-ray-curable resin, is kneaded with an extruder such as a single-screw extruder or twin-screw extruder, and during this kneading, a high-pressure gas, such as carbon dioxide or nitrogen, is injected (introduced) into the kneader and sufficiently impregnated into the thermoplastic elastomer (thermoplastic resin). In the subsequent molding/decompression step, molding and foaming are performed simultaneously. Specifically, the composition is extruded typically through a die arranged at a distal end of the extruder and thereby released from the pressure (the pressure is usually lowered to atmospheric pressure) to grow cells. In some cases (where necessary), a heating step may be further provided to enhance cell growth by heating. After cells are thus allowed to grow, the extrudate is rapidly cooled typically with cold water according to necessity to fix the shape and thereby give a foamed structure for the formation of a thermoplastic resin foam according to an embodiment of the present invention. The kneading/impregnation step and the molding/decompression step may be conducted with another molding machine such as injection molding machine than extruders. The procedure herein can be chosen so as to obtain a foamed structure of any of sheet, prismatic, and other forms.

Though not critical, the amount of the high-pressure gas to be incorporated into the composition is, for example, from about 2 to about 10 percent by weight, relative to the total amount of the thermoplastic elastomer component. The incorporation of the gas may be controlled as appropriate to obtain desired parameters such as density and expansion ratio.

The pressure at which a high-pressure gas is impregnated into the unfoamed resin molded article or thermoplastic resin composition in the gas-impregnation step according to a batch system or in the kneading/impregnation step according to a continuous system can be appropriately chosen in consideration typically of the type of the high-pressure gas and the operability in impregnation procedure. Typically, when carbon dioxide is used as the high-pressure gas, the pressure may be 6 MPa or more (e.g., from about 6 to about 100 MPa), and preferably 8 MPa or more (e.g., from about 8 to about 100 MPa). If the pressure of the high-pressure gas is lower than 6 MPa, considerable cell growth may occur during foaming, and this may tend to result in too large cell diameters and hence in disadvantages such as insufficient dustproofing effect. The reasons for this are as follows. When impregnation is performed at a low pressure, the amount of the gas impregnated is relatively small and cell nuclei grow at a lower rate as compared with impregnation at higher pressures. As a result, the number of cell nuclei formed is smaller. Because of this, the gas amount per cell increases rather than decreases, resulting in excessively large cell diameters. Furthermore, in a region of pressures lower than 6 MPa, only a slight change in impregnation pressure results in considerable changes in cell diameter and cell density, and this may often impede the control of cell diameter and cell density.

The temperature at which a high-pressure gas is impregnated into the unfoamed resin molded article or thermoplastic resin composition in the gas-impregnation step according to a batch system or in the kneading/impregnation step according to a continuous system varies depending typically on the types of the high-pressure gas and thermoplastic elastomer and can be chosen within a wide range. When impregnation operability and other conditions are taken into account, the impregnation temperature is, for example, from about 10°C to about 350°C. Typically, when a high-pressure gas is batchwise impregnated into an unfoamed resin molded article in a sheet form, the impregnation temperature is from about 10°C to about 200°C, and preferably from about 40 °C to about 200°C. When a high-pressure gas is injected into and kneaded with a thermoplastic resin composition (composition for the formation of a thermoplastic resin foam) according to a continuous system, the impregnation temperature is generally from about 60°C to about 350°C. When carbon dioxide is used as a high-pressure gas, it is preferred to impregnate the gas at a temperature (impregnation temperature) of 32°C or higher, and especially preferably 40°C or higher, in order to maintain its supercritical state.

Though not critical, the decompression rate in the decompression step is preferably from about 5 to about 300 MPa/second from the viewpoint of obtaining uniform fine cells. The heating temperature in the heating step is, for example, from about 40°C to about 250°C, and preferably from about 60°C to about 250°C.

The process for the production of a foamed structure has an advantage that a foamed structure having a high expansion ratio can be produced and, therefore, a thick thermoplastic resin foam can be produced. Specifically, this advantage is as follows. When a foamed structure is produced according to a continuous system, it is necessary to regulate the gap in the die at the tip of the extruder so as to be as narrow as possible (generally from 0.1 to 1.0 mm) for maintaining the pressure in the extruder in the kneading/impregnation step. This means that for obtaining a thick foamed structure, the composition for the formation of thermoplastic resin foam which has been extruded through such narrow gap should be foamed at a high expansion ratio. In the known techniques in use, however, a high expansion ratio is not obtained and the resulting foamed structure has been limited to thin one (e.g., one having a thickness of from about 0.5 to about 2.0 mm). In contrast, the process using a high-pressure gas can continuously produce a foamed structure having a final thickness of from 0.50 to 5.00 mm. In order to obtain such a thick foamed structure, the relative density of the foamed structure [(density of the foamed structure after foaming)/(density of the unfoamed molded article)] is desirably from 0.02 to 0.3, and preferably from 0.05 to 0.25. Relative densities thereof more than 0.3 are undesirable because foaming (expansion) is insufficient, while relative densities thereof less than 0.02 are undesirable because the foamed structure may have a considerably reduced strength.

The dimensions, such as shape and thickness, of the foamed structure are not critical and can be chosen as appropriate according to the intended use of thermoplastic resin foam to be formed through irradiation of the foamed structure with an active energy ray. The foamed structure produced according to the above process may be processed to have other dimensions such as shape and thickness prior to the irradiation with an active energy ray and/or prior to the heating for the formation of a cross-linked structure.

(Thermoplastic Resin Foam)

A thermoplastic resin foam according to an embodiment of the present invention can be obtained by subjecting the thermoplastic resin composition to foam molding to give a foamed structure, and irradiating the foamed structure with an active energy ray to form a cross-linked structure. According to another embodiment, the foamed structure bearing a cross-linked structure after the irradiation with an active energy ray is further heated to form another cross-linked structure to thereby give a thermoplastic resin foam. The thermoplastic resin foams thus obtained contain a cross-linked structure or structures, can thereby satisfactorily maintain their shapes, and are resistant to deformation and shrinkage of the cell structure in the foams. In particular, they can maintain a high expansion ratio achieved by foaming, because they are resistant to shrinkage of the cell structure caused by the restoring force of the resin.

Exemplary active energy rays include ionizing radiations such as alpha rays, beta rays, gamma rays, neutron beams, and electron beams; and ultraviolet rays. Among them, ultraviolet rays are preferably employed. The energy, duration, procedure, and other conditions for the irradiation with the active energy ray are not especially limited, as long as a cross-linked structure derived from the active-energy-ray-curable resin can be formed. Typically, when the foamed structure is in a sheet form and an ultraviolet ray is used as the active energy ray, the irradiation with the active energy ray may be performed, for example, by irradiating one side of the sheet foamed structure with an ultraviolet ray (irradiation energy: 750 mJ/cm$^2$) and then irradiating the other side with the ultraviolet ray (irradiation energy: 750 mJ/cm$^2$).

The way to heat the foam is not especialy limited, as long as a cross-linked structure can be formed in the foamed structure by the action of a thermal cross-linking agent. Typically, the heating may be performed by leaving the foamed structure at an ambient temperature of from 40°C to 150°C, preferably from 60°C to 140°C, and more preferably from 80°C to 130°C, for a duration of from 10 minutes to 10 hours, preferably from 30 minutes to 8 hours, and more preferably from 1 to 5 hours. The atmospheric temperature as above can be obtained according to a known heating procedure including heating with an electric heater, heating with electromagnetic waves such as infrared rays, or heating on a water bath.

The density of a thermoplastic resin foam (or foamed structure) can be determined in the following manner. Initially, the sample thermoplastic resin foam (or foamed structure) is punched with a punching tool (punch die) 40 mm long and 40 mm wide to give a specimen, and the dimensions of the punched specimen are measured. Independently, the thickness of the punched specimen is measured with a 1/100 dial gauge having a diameter ($\varphi$) of measuring terminal of 20 mm. The volume of the punched specimen is calculated from these measured values. Next, the weight of the punched specimen is measured with an even balance having a minimum scale of 0.01 g or more. The density (g/cm$^3$) of the thermoplastic resin foam (or foamed structure) is then calculated from these data.

The thickness, density, and other factors of the thermoplastic resin foam, and the thickness, density, relative density, and other factors of the foamed structure can be controlled by suitably choosing and setting operation conditions according to the type of the high-pressure gas to be used, and the components of the thermoplastic elastomer (thermoplastic resin) to be used. Exemplary operation conditions include the temperature, pressure, and duration in the gas-impregnation step or kneading/impregnation step in the preparation of the foamed structure; the decompression rate, temperature, and pressure in the decompression step or molding/decompression step; and heating temperature in the heating step performed after the decompression step or after the molding/decompression step.

The thermoplastic resin foam preferably has a closed cell structure or semi-open/semi-closed cell structure as a cell structure. The semi-open/semi-closed cell structure is a cell structure containing both a closed cell moiety and an open cell moiety, and the ratio between the closed cell moiety and open cell moiety is not critical. The thermoplastic resin foam more preferably has such a cell structure that a closed cell moiety occupies 80% or more, and furthermore preferably 90% or more, of the thermoplastic resin foam.

The dimensions such as shape and thickness of the thermoplastic resin foam are not critical and can be appropriately set according typically to the intended use. For example, the thickness can be chosen within a range of from about 0.1 to about 10 mm, preferably from about 0.1 to about 3.0 mm, and more preferably from about 0.2 to about 2.0 mm. Exemplary shapes of the foam include a sheet form, tape form, and film form.

The thermoplastic resin foams have a high expansion ratio and excel in cushioning properties. They also show satisfactory strain recovery, because they excel in shape retention and each have a cell structure resistant to deformation and shrinkage.

A strain recovery (80°C, 50% compression set) in the present invention can be determined in the following manner. In Fig. 1, views 1a, 1b, and 1c illustrate how a sample and other components are before compressing to 50%, during compressing to 50%, and after release from compressing to 50% (after decompression), respectively; and reference numerals 11, 12, and 13 stand for a sample, a spacer, and a plate, respectively. The sample 11 is prepared by molding a thermoplastic resin foam into a sheet about 2 mm thick, and stacking five plies of the sheet. Initially, the thickness "a" of the sample 11 is accurately measured, and the thickness (height) "b" of the spacers 12 is set to be one-half the thickness "a". With reference to the view 1a of Fig. 1, the sample 11 and the spacers 12 are arranged between two plates 13. A pressure is applied perpendicularly to the plates 13 to compress until the thickness of the sample 11 becomes equal to the thickness "b" of the spacers 12. These are stored at an ambient temperature of 80°C for 24 hours while maintaining the compression. Twenty-four (24) hours later, they are cooled to ordinary temperature while maintaining the compression. After being cooled to ordinary temperature, the sample 11 is released from the compression (decompressed) and is left stand at ordinary temperature for 30 minutes. The view 1c of Fig. 1 illustrates how the sample is after decompression. After being left stand at ordinary temperature for 30 minutes, the thickness "c" of the sample 11 is measured.

The measured data are substituted into the following calculation expression, and the resulting value is defined as the strain recovery (80°C, 50% compression set).

$$\text{Strain recovery (80°C, 50\% compression set) [\%]} = (c-b)/(a-b) \times 100$$

The thermoplastic resin foams excel in properties such as strength, flexibility, cushioning properties, and compressive strain recovery and excel also in strain recovery after being compressed and held at high temperatures. The thermoplastic resin foams are therefore very useful, for example, as internal insulators typically for electronic appliances, cushioning materials, sound insulators, heat insulators, food packaging materials, clothing materials, and building materials.

EXAMPLES

The present invention will be illustrated in further detail with reference to several examples below. It should be noted, however, these examples are never construed to limit the scope of the present invention.

(EXAMPLE 1)

A resin composition was prepared by kneading 100 parts by weight of a thermoplastic urethane elastomer having a JIS-A hardness of 60 degrees and using an adipate-type polyol (trade name "Miractran E660 MZAA" supplied by Nippon Polyurethane Industry Co., Ltd., SP: 20.9 [(J/cm$^3$)$^{1/2}$]) at a temperature of 180°C in a kneading machine equipped with blades of roller type (trade name "LABO PLASTOMILL" supplied by Toyo Seiki Seisaku-Sho, Ltd.); and further kneading the kneadate with 6 parts by weight of a multifunctional urethane acrylate (trade name "UV 1700B" supplied by Nippon Synthetic Chemical Industry Co., Ltd., SP: 21.3 [(J/cm$^3$)$^{1/2}$]) and 0.225 part by weight of 2-methyl-1[4-(methylthio)phenyl]-2-morpholinopropan-1-one (trade name "Irgacure 907" supplied by Ciba Specialty Chemicals Corporation) as a photoinitiator at a temperature of 120°C.

The resin composition was molded using a hot-plate press heated to 120°C and thereby yielded an unfoamed resin molded article as a sheet 2 mm thick.

The unfoamed resin molded article was placed in a pressure-tight vessel and held at an ambient temperature of 60°C under a pressure of 10 MPa/cm$^2$ for 20 minutes to impregnate the same with carbon dioxide. Twenty (20) minutes into the pressurization, the impregnated article was allowed to expand by subjecting to rapid decompression and thereby yielded a foamed structure.

The foamed structure was irradiated sequentially at each side with an ultraviolet ray (irradiation energy per one side: 750 mJ/cm$^2$) to form a cross-linked structure and thereby yielded a foam (2.5 mm thick).

(EXAMPLE 2)

A foam (2.5 mm thick) was prepared by the procedure of Example 1, except for using the multifunctional urethane acrylate (trade name "UV 1700B" supplied by Nippon Synthetic Chemical Industry Co., Ltd.) in an amount of 20 parts by weight and the photoinitiator (trade name "Irgacure 907" supplied by Ciba Specialty Chemicals Corporation) in an amount of 0.75 part by weight.

(EXAMPLE 3)

A foam (2.8 mm thick) was prepared by the procedure of Example 1, except for using the multifunctional urethane acrylate (trade name "UV 1700B" supplied by Nippon Synthetic Chemical Industry Co., Ltd.) in an amount of 40 parts by weight and the photoinitiator (trade name "Irgacure 907" supplied by Ciba Specialty Chemicals Corporation) in an amount of 1.5 parts by weight.

(EXAMPLE 4)

A foam (2.6 mm thick) was prepared by the procedure of Example 1, except for using another resin composition. This resin composition had been prepared by kneading 100 parts by weight of a thermoplastic acrylic elastomer having a JIS-A hardness of 68 degrees (trade name "Nipol AR12" supplied by ZEON CORPORATION, SP: 20.2 [(J/cm$^3$)$^{1/2}$]) at a temperature of 180°C in a kneading machine equipped with blades of roller type (trade name "LABO PLASTOMILL" supplied by Toyo Seiki Seisaku-Sho, Ltd.), and further kneading the kneadate at a temperature of 120°C with 40 parts by weight of a multifunctional urethane acrylate (trade name "UV 1700B" supplied by Nippon Synthetic Chemical Industry Co., Ltd.) and 1.5 parts by weight of photoinitiator (trade name "Irgacure 907" supplied by Ciba Specialty Chemicals Corporation).

(EXAMPLE 5)

A foam (2.5 mm thick) was prepared by the procedure of Example 1, except for using another resin composition. This resin composition had been prepared by kneading 100 parts by weight of a thermoplastic urethane elastomer having a JIS-A hardness of 60 degrees and using an adipate-type polyol (trade name "Miractran E660 MZAA" supplied by Nippon Polyurethane Industry Co., Ltd.) at a temperature of 180°C in a kneading machine equipped with blades of roller type (trade name "LABO PLASTOMILL" supplied by Toyo Seiki Seisaku-Sho, Ltd.), and further kneading the kneadate with 40 parts by weight of a polypropylene glycol diacrylate (trade name "Aronix M225" supplied by Toagosei Co., Ltd., SP: 18.4 [(J/cm$^3$)$^{1/2}$]) and 1.5 parts by weight of bis(2,4,6-trimethylbenzoyl)-phenylphosphine oxide (trade name "Irgacure 819" supplied by Ciba Specialty Chemicals Corporation) as a photoinitiator at a temperature of 120°C.

(EXAMPLE 6)

A foam (2.6 mm thick) was prepared by the procedure of Example 5, except for using the polypropylene glycol diacrylate (trade name "Aronix M225" supplied by Toagosei Co., Ltd.) in an amount of 100 parts by weight and the bis(2,4,6-trimethylbenzoyl)-phenylphosphine oxide (trade name "Irgacure 819" supplied by Ciba Specialty Chemicals Corporation) in an amount of 3.75 parts by weight.

(EXAMPLE 7)

A foam (8.2 mm thick) was prepared by the procedure of Example 1, except for using another resin composition.

This resin composition had been prepared by kneading 100 parts by weight of a thermoplastic urethane elastomer having a JIS-A hardness of 60 degrees and using an adipate-type polyol (trade name "Miractran E660 MZAA" supplied by Nippon Polyurethane Industry Co., Ltd.) at a temperature of 180°C in a kneading machine equipped with blades of roller type (trade name "LABO PLASTOMILL" supplied by Toyo Seiki Seisaku-Sho, Ltd.), and further kneading the kneadate with 100 parts by weight of trimethylolpropane triacrylate (trade name "Aronix M309" supplied by Toagosei Co., Ltd., SP: 20.7 [$(J/cm^3)^{1/2}$]) and 3.75 parts by weight of bis(2,4,6-trimethylbenzoyl)-phenylphosphine oxide (trade name "Irgacure 819" supplied by Ciba Specialty Chemicals Corporation) as a photoinitiator at a temperature of 120°C.

(EXAMPLE 8)

A thermoplastic acrylic elastomer (SP: 20.9 [$(J/cm^3)^{1/2}$]) was prepared by kneading 85 parts by weight of butyl acrylate, 15 parts by weight of acrylonitrile, and 2.5 parts by weight of acrylic acid at a temperature of 130°C in a kneading machine equipped with blades of Banbury type (trade name "LABO PLASTOMILL" supplied by Toyo Seiki Seisaku-Sho, Ltd.). Next, a resin composition was prepared by kneading 100 parts by weight of the above-prepared thermoplastic acrylic elastomer with 100 parts by weight of trimethylolpropane triacrylate (trade name "Aronix M309" supplied by Toagosei Co., Ltd.) and 3.75 parts by weight of bis(2,4,6-trimethylbenzoyl)-phenylphosphine oxide (trade name "Irgacure 819" supplied by Ciba Specialty Chemicals Corporation) as a photoinitiator at a temperature of 120°C, and further kneading the kneadate with 4 parts by weight of a polyisocyanate compound (trade name "CORONATE HX" supplied by Nippon Polyurethane Industry Co., Ltd.) at a temperature of 70°C for 2 minutes.
The resin composition was molded using a hot-plate press heated to 70°C and thereby yielded an unfoamed resin molded article as a sheet 1 mm thick.
The unfoamed resin molded article was placed in a pressure-tight vessel and held at an ambient temperature of 75°C under a pressure of 10 MPa/cm$^2$ for 20 minutes to impregnate the same with carbon dioxide. Twenty (20) minutes into the pressurization, the impregnated article was allowed to expand through rapid decompression (abrupt pressure drop) and thereby yielded a foamed structure.
The foamed structure was irradiated sequentially at each side with an ultraviolet ray (irradiation energy per one side: 750 mJ/cm$^2$) to form a cross-linked structure, was subjected to a heat treatment by holding the same at an ambient temperature of 100°C for 3 hours to further form a cross-linked structure, and thereby yielded a foam (3.0 mm thick).

(COMPARATIVE EXAMPLE 1)

A resin composition was prepared by kneading 100 parts by weight of a polypropylene having a melt tension (190°C) of 20 cN at a temperature of 180°C in a kneading machine equipped with blades of roller type (trade name "LABO PLASTOMILL" supplied by Toyo Seiki Seisaku-Sho, Ltd.).
The resin composition was molded using a hot-plate press heated to 180°C and thereby yielded an unfoamed resin molded article as a sheet 2 mm thick.
The unfoamed resin molded article was placed in a pressure-tight vessel and held at an ambient temperature of 160°C and a pressure of 10 MPa/cm$^2$ for 20 minutes to impregnate the same with carbon dioxide. Twenty (20) minutes into the pressurization, the impregnated article was allowed to expand through rapid decompression and thereby yielded a foam (4.2 mm thick).

(COMPARATIVE EXAMPLE 2)

A resin composition was prepared by kneading 100 parts by weight of a thermoplastic urethane elastomer having a JIS-A hardness of 60 degrees and using an adipate-type polyol (trade name "Miractran E660 MZAA" supplied by Nippon Polyurethane Industry Co., Ltd.) at a temperature of 180°C in a kneading machine equipped with blades of roller type (trade name "LABO PLASTOMILL" supplied by Toyo Seiki Seisaku-Sho, Ltd.).
The resin composition was molded using a hot-plate press heated to 160°C and thereby yielded an unfoamed resin molded article as a sheet 2 mm thick.
The unfoamed resin molded article was placed in a pressure-tight vessel and held at an ambient temperature of 60°C and a pressure of 10 MPa/cm$^2$ for 20 minutes to impregnate the same with carbon dioxide. Twenty (20) minutes into the pressurization, the impregnated article was allowed to expand through rapid decompression and thereby yielded a foam (2.5 mm thick).

(Evaluations)

The samples according to the examples and comparative examples were evaluated through the measurements of density and strain recovery (80°C, 50% compression set). Independently, the retention of tensile stress (80°C ambient temperature, 10% tensile strain, after 1400 seconds) of an unfoamed molded article obtained through molding of each of the resin compositions in these examples and comparative examples was measured. The results are shown in Table 1.

[Measurement of Density (Apparent Density)]

The density was determined by measuring the specific gravity of a sample with an electronic densitometer (trade name "MD-200S" supplied by Alpha Mirage Co., Ltd.). The measurement of density was performed after a sample foam (foamed structure) thus produced was stored at room temperature for 24 hours.
For Examples 1 to 7, the densities of the foamed structure and foam were measured respectively, and the results are shown in "before ultraviolet irradiation" and "after ultraviolet irradiation" in Table 1. For Example 8, the densities of the foamed structure, of the foamed structure bearing a cross-linked structure after ultraviolet irradiation but before heating, and of the foam were measured, and the results are shown as data in "Before ultraviolet irradiation", "After ultraviolet irradiation", and "After ultraviolet irradiation and heating" in Table 1. For Comparative Examples 1 and 2, the density of the foam was measured, and the results are shown as data in "Before ultraviolet irradiation" in Table 1.

[Measurement of Strain Recovery (80°C, 50% compression set)]

A foam to be tested was cut into 25-mm square pieces, five plies of the cut pieces were stacked to give a test piece (corresponding to the sample 11 in Fig. 1), and the thickness of the test piece was accurately measured. The measured thickness of the test piece was defined as a thickness "a" (corresponding to the thickness "a" in Fig. 1). Using spacers (corresponding to the spacers 12 in Fig. 1) having a thickness "b" (corresponding to the thickness "b" in Fig. 1) one-half the thickness of the test piece, the test piece was compressed to a thickness (thickness "b") corresponding to 50% of the initial thickness and, under this condition (corresponding to "during compressing to 50%" 1b in Fig. 1), was stored at a temperature of 80°C for 24 hours. Twenty-four (24) hours later, the test piece was cooled to ordinary temperature while maintaining under compression, and was then released from the compression (decompressed). The thickness of the test piece was accurately measured 30 minutes after the decompression and defined as a thickness "c" (corresponding to the thickness "c" in Fig. 1). The ratio of the recovered distance (recovered length) to the compressed distance (compressed length) is defined as a strain recovery (80°C, 50% compression set).

$$\text{Strain recovery (80°C, 50\% compression set) [\%]} = (c-b)/(a-b) \times 100$$

For Examples 1 to 8, the strain recoveries (80°C, 50% compression set) of the foamed structure and of the foam were measured, and the results are shown as data in "Before cross-linking" and "After cross-linking" in Table 1. For Comparative Examples 1 and 2, the strain recovery of the foam was measured, and the results are shown as data in "Before cross-linking" in Table 1.

[Measurement of Retention of Tensile Stress (80°C ambient temperature, 10% tensile strain, after 1400 seconds) of Unfoamed Molded Article Molded from Resin Composition]

An unfoamed molded article as a sheet 0.5 mm thick was prepared by molding a resin composition to be tested using a hot-plate press heated to 120°C. A 10% tensile strain was applied to the unfoamed molded article using the Rheometrics ARES Rheometer (Dynamic Viscoelasticity Analyzer) (supplied by TA Instruments) in the tensile stress relaxation measurement mode. A stress immediately after the application of the strain, and a stress after 1400 second-application of the strain were measured and defined as the initial tensile stress and the tensile stress after 1400 seconds, respectively. The retention of tensile stress was then determined according to the following equation:

$$\text{Retention of tensile stress (80°C ambient temperature, 10\% tensile strain, after 1400 seconds)} = (\text{Tensile stress after 1400 seconds})/(\text{Initial tensile stress}) \times 100$$

The measured data of the retention of tensile stress (80°C ambient temperature, 10% tensile strain, after 1400 seconds) are shown as data in "Retention of tensile stress" in Table 1.

[Table 1]

TABLE 1

| | Retention of tensile stress [%] | Density [g/cm³] | | | Strain recovery (%} | |
|---|---|---|---|---|---|---|
| | | Before ultraviolet irradiation | After ultraviolet irradiation | After ultraviolet irradiation and heating | Before cross-linking | After cross-linking |
| Example 1 | 60 | 0.27 | 0.21 | - | 9.7 | 18.8 |
| Example 2 | 52 | 0.22 | 0.16 | - | 4.1 | 14.1 |
| Example 3 | 41 | 0.30 | 0.10 | - | 3.9 | 4.6 |
| Example 4 | 48 | 0.43 | 0.13 | - | 0 | 26 |
| Example 5 | 44 | 0.28 | 0.22 | - | 2.8 | 18.5 |
| Example 6 | 69 | 0.54 | 0.12 | - | 0 | 23.3 |
| Example 7 | 75 | 0.36 | 0.022 | - | 0 | 49.6 |
| Example 8 | 36 | 0.68 | 0.05 | 0.028 | 0 | 4.1 |
| Comp. Ex. 1 | 35 | 0.12 | - | - | 0 | - |
| Comp. Ex. 2 | 35 | 0.25 | - | - | 10.7 | - |

Industrial Applicability

Thermoplastic resin foams according to embodiments of the present invention are useful, for example, as internal insulators typically for electronic appliances, cushioning materials, sound insulators, heat insulators, food packaging materials, clothing materials, and building materials.

**Claims**

1.  A thermoplastic resin foam which is obtained by subjecting a thermoplastic resin composition containing a thermoplastic elastomer and an active-energy-ray-curable resin to foam molding to give a foamed structure, and irradiating the foamed structure with an active energy ray to allow the active-energy-ray-curable resin to form a cross-linked structure in the foamed structure.

2.  A thermoplastic resin foam which is obtained by subjecting a thermoplastic resin composition containing a thermoplastic elastomer, an active-energy-ray-curable resin, and a thermal cross-linking agent to foam molding to give a foamed structure, irradiating the foamed structure with an active energy ray to allow the active-energy-ray-curable resin to form a cross-linked structure in the foamed structure, and heating the resulting foamed structure bearing the cross-linked structure to thereby allow the thermal cross-linking agent to form another cross-linked structure in the foamed structure.

3.  The thermoplastic resin foam according to one of claims 1 and 2, wherein the foam molding of the thermoplastic resin composition is performed by molding the thermoplastic resin composition to give an unfoamed resin molded article, impregnating the unfoamed resin molded article with a blowing agent, and subjecting the impregnated unfoamed resin molded article to decompression to allow the blowing agent to expand to thereby form cells.

4.  The thermoplastic resin foam according to any one of claims 1 to 3, wherein, when the thermoplastic resin composition is molded into an unfoamed molded article as a sheet having a thickness of 0.5 mm, the unfoamed molded article has a retention of tensile stress of 40% or more, as measured after applying a 10% tensile strain at an ambient temperature of 80°C for 1400 seconds.

5. The thermoplastic resin foam according to any one of claims 1 to 4, wherein the blowing agent is carbon dioxide or nitrogen.

6. The thermoplastic resin foam according to any one of claims 1 to 5, wherein the blowing agent is a fluid in a supercritical state.

7. A process for producing a thermoplastic resin foam, the process comprising the steps of subjecting a thermoplastic resin composition containing a thermoplastic elastomer and an active-energy-ray-curable resin to foam molding to give a foamed structure; and irradiating the foamed structure with an active energy ray to allow the active-energy-ray-curable resin to form a cross-linked structure in the foamed structure.

8. A process for producing a thermoplastic resin foam, the process comprising the steps of subjecting a thermoplastic resin composition containing a thermoplastic elastomer, an active-energy-ray-curable resin, and a thermal cross-linking agent to foam molding to give a foamed structure; irradiating the foamed structure with an active energy ray to allow the active-energy-ray-curable resin to form a cross-linked structure in the foamed structure; and heating the resulting foamed structure bearing the cross-linked structure to thereby allow the thermal cross-linking agent to form another cross-linked structure in the foamed structure.

[Fig. 1]

| INTERNATIONAL SEARCH REPORT | International application No. |
|---|---|
| | PCT/JP2008/059823 |

A.  CLASSIFICATION OF SUBJECT MATTER
*C08J9/36*(2006.01)i,  *C08J9/12*(2006.01)i

According to International Patent Classification (IPC) or to both national classification and IPC

B.  FIELDS SEARCHED

Minimum documentation searched (classification system followed by classification symbols)
C08J9/04-9/14,  9/36

Documentation searched other than minimum documentation to the extent that such documents are included in the fields searched
Jitsuyo Shinan Koho        1922-1996    Jitsuyo Shinan Toroku Koho    1996-2008
Kokai Jitsuyo Shinan Koho   1971-2008    Toroku Jitsuyo Shinan Koho    1994-2008

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>A | JP 2001-139929 A  (Sekisui Chemical Co., Ltd.), 22 May, 2001 (22.05.01), Claims; Par. Nos. [0014] to [0019], [0032] to [0034], [0038] to [0039], [0043] to [0049] (Family: none) | 1,4-7<br>2-3,8 |
| X<br>A | JP 2005-146136 A  (JSR Corp.), 09 June, 2005 (09.06.05), Claims; Par. Nos. [0046], [0048] to [0049], [0051] to [0052], [0056], [0059], [0063] to [0065] (Family: none) | 1,4-7<br>2-3,8 |
| A | JP 2000-169615 A  (Nitto Denko Corp.), 20 June, 2000 (20.06.00), Claims; Par. Nos. [0012] to [0020]; example 1 (Family: none) | 1-8 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 July, 2008 (30.07.08) | 12 August, 2008 (12.08.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/059823

| C (Continuation). | DOCUMENTS CONSIDERED TO BE RELEVANT | |
|---|---|---|
| Category* | Citation of document, with indication, where appropriate, of the relevant passages | Relevant to claim No. |
| A | JP 6-80810 A  (Tonen Chemical Corp.),<br>22 March, 1994 (22.03.94),<br>Claims; Par. Nos. [0022] to [0026]<br>(Family: none) | 1-8 |
| A | JP 10-245447 A  (Sekisui Chemical Co., Ltd.),<br>14 September, 1998 (14.09.98),<br>Claims; Par. Nos. [0008], [0014] to [0016],<br>[0019], [0022]<br>(Family: none) | 1-8 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP H10168215 A